# EUROPÄISCHE PATENTSCHRIFT

(11) **EP 2 785 991 B1**
(45) Veröffentlichungstag und Bekanntmachung des Hinweises auf die Patenterteilung: **11.01.2017**
(21) Anmeldenummer: 12794312.4
(22) Anmeldetag: 28.11.2012
(51) Int. Cl.: F01N 3/20

(54) **ABGASKANALSEGMENT MIT EINER DOSIERVORRICHTUNG ZUR EINDOSIERUNG EINES REDUKTIONSMITTELS IN EINEN ABGASKANAL EINER BRENNKRAFTMASCHINE**
EXHAUST PIPE SEGMENT WITH A DOSING DEVICE FOR THE INJECTION OF A REDUCING AGENT INTO THE EXHAUST PIPE OF AN INTERNAL COMBUSTION ENGINE
SEGMENT DE TUYAU D'ÉCHAPPEMENT AVEC UN DISPOSITIF DE DOSAGE POUR L'INJECTION D'UN AGENT RÉDUCTEUR DANS LE TUYAU D'ÉCHAPPEMENT D'UN MOTEUR À COMBUSTION INTERNE

(30) Priorität: 29.11.2011 DE 102011087284
(43) Veröffentlichungstag der Anmeldung: 08.10.2014
(73) Patentinhaber: Robert Bosch GmbH, 70442 Stuttgart (DE)
(72) Erfinder: HESSELMANN, Christoph, 83569 Vogtareuth (DE)
(86) Internationale Anmeldenummer: PCT/EP2012/073787
(87) Internationale Veröffentlichungsnummer: WO 2013/079504

(56) Entgegenhaltungen:
- WO-A1-96/36797
- WO-A1-2007/091969
- US-A1- 2008 022 663
- US-A1- 2008 245 055

## Beschreibung

### Stand der Technik

Die Erfindung betrifft ein Abgaskanalsegment mit einer Dosiervorrichtung zur Eindosierung eines Reduktionsmittels in einen Abgaskanal einer Brennkraftmaschine sowie ein Verfahren zur Eindosierung eines Reduktionsmittels in den Abgaskanal nach der Gattung der unabhängigen Ansprüche.

Um die immer strenger werdende Abgasgesetzgebung, welche allein mit innermotorischen Maßnahmen nicht oder nur unter extremem Aufwand und damit verbundenen hohen Kosten erreicht werden können, zu erfüllen, haben sich Abgasnachbehandlungseinrichtungen etabliert, mit welchen ein Großteil der schädlichen Abgaskomponenten aus dem Abgas herausgefiltert bzw. in unschädliche Abgaskomponenten umgewandelt werden können. Vor allem bei selbstzündenden Verbrennungsmotoren bzw. Motoren, bei denen ein Kraftstoff unter Luftüberschuss verbrannt wird, entstehen schädliche Stickstoffoxide, welche durch die Eindosierung von einer wässrigen Harnstofflösung zu Stickstoff reduziert werden.

Aus der DE 199 61 947 ist ein Abgaskanal mit einer Vorrichtung zur Erzeugung eines Reduktionsmittel-Luft-Gemisches mit einem Mischraum bekannt, in welchen eine wässrige Harnstoff-Lösung und Druckluft zugeführt werden, wobei die wässrige Harnstofflösung durch die Druckluft in einen Abgaskanal einer Brennkraftmaschine gefördert wird.

Aus der WO 2007/091969 ist eine Anordnung zur Einspritzung eines flüssigen Hilfsmittels mit Druckluftunterstützung bekannt, welche einen Düsenkopf aufweist, in den eine Vermischung des Hilfsmittels mit der Druckluft stattfindet.

Die US 2008/0022663 zeigt eine in den Abgastrakt ragende Rohranordnung zu dessen Beaufschlagung mit einer wässrigen Harnstofflösung.

### Offenbarung der Erfindung

Das erfindungsgemäße Abgaskanalsegment sowie das erfindungsgemäße Verfahren zur Eindosierung eines Reduktionsmittels mit den Merkmalen der unabhängigen Ansprüche bieten demgegenüber den Vorteil, dass der Mischraum in einem abgasführenden Bereich des Abgaskanalsegments angeordnet ist, wodurch der Mischraum im Betrieb einer Brennkraftmaschine den hohen Temperaturen des Abgases im Abgaskanals ausgesetzt ist. Dadurch können Ablagerungen, beispielsweise in dem Mischraum auskristallisierter Harnstoff, abschmelzen, was zu einer Selbstreinigung des Mischraums führt.

Durch die in den Unteransprüchen aufgeführten Maßnahmen sind vorteilhafte Weiterbildungen und Verbesserungen der im Anspruch 1 angegebenen Vorrichtung sowie des in Anspruch 8 angegebenen Verfahrens möglich.

Vorteilhafterweise ist vorgesehen, dass die Dosiervorrichtung einen ersten Bereich aufweist, welcher sich außerhalb des abgasführenden Bereichs des Abgaskanals befindet, und dass die Dosiervorrichtung einen zweiten Bereich aufweist, wobei der zweite Bereich in dem abgasführenden Bereich angeordnet ist. Dadurch kann erreicht werden, dass die Bereiche der Vorrichtung, welche besonders temperaturempfindlich sind, beispielsweise Dichtungen und Anschlussöffnungen der Dosiervorrichtung, außerhalb des Abgaskanals angeordnet und somit thermisch geringer belastet werden, während andere Bereiche der Dosiervorrichtung, in den die hohen Temperaturen des Abgases im Abgaskanal vorteilhaft sind, beispielsweise um die Reaktionskinetik zu erhöhen oder um Ablagerungen aufzuschmelzen, von den hohen Temperaturen des Abgases im Abgaskanal profitieren können.

Eine vorteilhafte Weiterbildung besteht darin, dass der erste Zufuhrkanal zumindest abschnittsweise als Kapillare ausgebildet ist, da durch die hohen Adhäsionskräfte zwischen dem flüssigen Reduktionsmittel und der Wand der Kapillare wird ein unkontrollierter Austritt des Reduktionsmittels aus dem ersten Zufuhrkanal in die Mischkammer vermieden wird. Somit tritt nur Reduktionsmittel in die Mischkammer ein, wenn das Reduktionsmittel in der Kapillare zusätzlich unter einen, gegenüber dem Druck in der Mischkammer erhöhten, Druck gesetzt wird. Ferner ist die freie Oberfläche des Reduktionsmittels gegenüber der Grenzfläche zur Austrittsöffnung in die Mischkammer klein, so dass es nur zu einer geringen Verdunstung des Reduktionsmittels kommt. Sollten sich, insbesondere bei Verwendung einer wässrigen Harnstofflösung als Reduktionsmittel, durch Verdunstung des Wassers Harnstoffkristalle in der Kapillare ablagern, so lösen sich diese Kristalle wieder, wenn die Kapillare erneut mit wässriger Harnstofflösung aus dem ersten Zufuhrkanal versorgt wird. Eine Kapillare ermöglicht durch ihren engen Querschnitt eine sehr genaue Abgabe des Reduktionsmittels in die Mischkammer, womit die Dosiergenauigkeit der Dosiervorrichtung erhöht werden kann.

Eine alternative vorteilhafte Weiterbildung besteht darin, dass der erste Zufuhrkanal einen ersten Abschnitt und einen zweiten Abschnitt aufweist, wobei der zweite Abschnitt als Kapillare ausbildet ist, und wobei die Kapillare in den Mischraum mündet. Um Drosselverluste zu reduzieren bzw. den Durchfluss durch den ersten Zufuhrkanal nicht unnötig zu begrenzen, kann es vorteilhaft sein, wenn nicht der gesamte Zufuhrkanal, sondern nur der letzte Abschnitt des Zufuhrkanals, welcher in den Mischraum mündet, als Kapillare ausgebildet ist. Auch in dieser Ausführungsform verhindern die Adhäsionskräfte zwischen der Wand der Kapillare und dem flüssigen Reduktionsmittel ein ungewünschtes Einbringen von Reduktionsmittel in den Mischraum.

Eine weitere vorteilhafte Weiterbildung besteht darin, dass die Dosiervorrichtung in dem ersten Zufuhrkanal ein Dosierventil aufweist, über welches die Menge des dem Mischraum zugeführten Reduktionsmittels gesteuert oder geregelt wird. Durch das Dosierventil kann die Menge des Reduktionsmittels exakt dosiert werden, ferner kann der Bereich des ersten Zufuhrkanals, der in Strömungsrichtung des Reduktionsmittels vor dem Dosierventil liegt, durch das Ventil sicher und vollständig von der Mischkammer getrennt werden. Besonders vorteilhaft ist dabei, wenn der erste Zufuhrkanal einen ersten Abschnitt und einen zweiten Abschnitt aufweist, wobei der zweite Abschnitt des ersten Zufuhrkanals als Kapillare ausgebildet ist. Bei dieser Ausführungsform kann das Dosierventil im Übergang zwischen einem, verglichen mit der Kapillare breiten, ersten Abschnitt des ersten Zufuhrkanal und dem als Kapillare ausgebildeten zweiten Abschnitt des ersten Zufuhrkanals angeordnet sein. Damit kann verhindert werden, dass das Reduktionsmittel aus der Kapillare, beispielsweise durch Druckpulse eines Fördermittels, unkontrolliert in den Mischraum eindosiert wird, da solche Druckpulse sich nur bei geöffnetem Dosierventil und gewünschter Eindosierung des Reduktionsmittels bis in die Kapillare auswirken. Ferner bleibt somit nur ein sehr geringes Reduktionsmittelvolumen zwischen dem Dosierventil und dem Mischraum, so dass das Dosierventil in einigen Ausführungsformen, beispielsweise wenn in dem ersten Abschnitt des ersten Zufuhrkanals ein niedrigerer Druck als in dem Mischraum herrscht, zum Absaugen des Reduktionsmittels aus der Kapillare genutzt werden kann.

Vorteilhafterweise ist vorgesehen, dass der zweite Bereich der Dosiervorrichtung als gasgefüllter Hohlzylinder ausgebildet ist, wobei das Gas des gasgefüllten Hohlzylinders den ersten Zufuhrkanal und/oder den zweiten Zufuhrkanal thermisch gegenüber dem abgasführenden Bereich des Abgaskanalsegments isoliert. Durch diesen gasgefüllten Zylinder kann verhindert werden, dass der zweite Bereich der Dosiervorrichtung bei Betrieb der Vorrichtung thermisch derart stark belastet ist, dass es zu einer Auskristallisation bzw. Zersetzung des Reduktionsmittels während einer Verweildauer in diesem zweiten Bereich kommt. Darüber hinaus wirkt dieser Hohlzylinder als Isolation für die Komponenten im ersten Bereich der Dosiervorrichtung.

Eine weitere vorteilhafte Weiterbildung besteht darin, dass der zweite Zufuhrkanal den ersten Zufuhrkanal ringförmig ummantelt oder spiralförmig um den ersten Zufuhrkanal angeordnet ist. Das durch den zweiten Zufuhrkanal strömende gasförmige Zerstäubungsmedium kann somit kühlend auf das flüssige Reduktionsmittel im ersten Zufuhrkanal wirken. Eine spiralförmige Ausgestaltung des zweiten Zufuhrkanals verlängert die Wegstrecke für das gasförmige Zerstäubungsmedium bis zum Eintritt in die Mischkammer, was den unkontrollierten Austritt beziehungsweise ein Rückströmen des Reduktionsmittels aus der Mischkammer über den zweiten Zufuhrkanal, beispielsweise durch Kriechen des flüssigen Reduktionsmittels, erschwert.

Eine weitere vorteilhafte Weiterbildung besteht darin, dass eine in den Mischraum führende Austrittsöffnung des zweiten Zufuhrkanals düsenförmig ausgebildet ist. Eine düsenförmige Austrittsöffnung erhöht die Eintrittsgeschwindigkeit des gasförmigen Zerstäubungsmediums in den Mischraum und erschwert zusätzlich ein Rückströmen des Reduktionsmittels aus dem Mischraum in den zweiten Zufuhrkanal. Dabei ist es besonders vorteilhaft, wenn in dem zweiten Zufuhrkanal, dem Mischraum vorgeschaltet, ein Rückschlagventil angeordnet ist. Dieses Rückschlagventil unterbindet ein Rückströmen von Abgas der Brennkraftmaschine aus dem Abgaskanal und/oder ein Rückströmen von Reduktionsmittel aus dem Mischraum durch den zweiten Zufuhrkanal, insbesondere dann, wenn der Druck im Mischraum oder im Abgaskanal höher ist als in dem zweiten Zufuhrkanal.

Für viele Ausführungsformen kann es vorteilhaft sein, wenn das gasförmige Treibmedium Druckluft ist, und die Druckluft in dem Mischraum derart auf das flüssige Reduktionsmittel trifft, dass sich in dem Mischraum ein Aerosol des flüssigen Reduktionsmittels bildet. Bei der Aerosolbildung entsteht ein besonders feines Spray mit kleiner Tröpfchengröße des flüssigen Reduktionsmittels, wodurch das flüssige Reduktionsmittel sich sehr fein im Abgaskanal verteilt. Die zahlreichen kleinen Flüssigkeitstropfen des Aerosols bilden gegenüber dem Abgas im Abgaskanal eine sehr große Oberfläche aus, was die Wirkung des Reduktionsmittels erhöht bzw. ein Überführen des flüssigen Reduktionsmittels in einen gasförmigen Zustand begünstigt.

### Zeichnungen

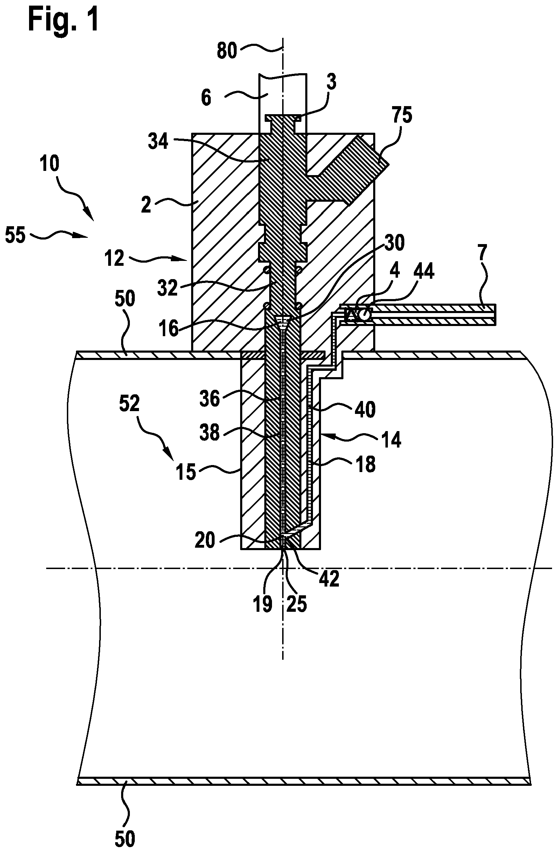

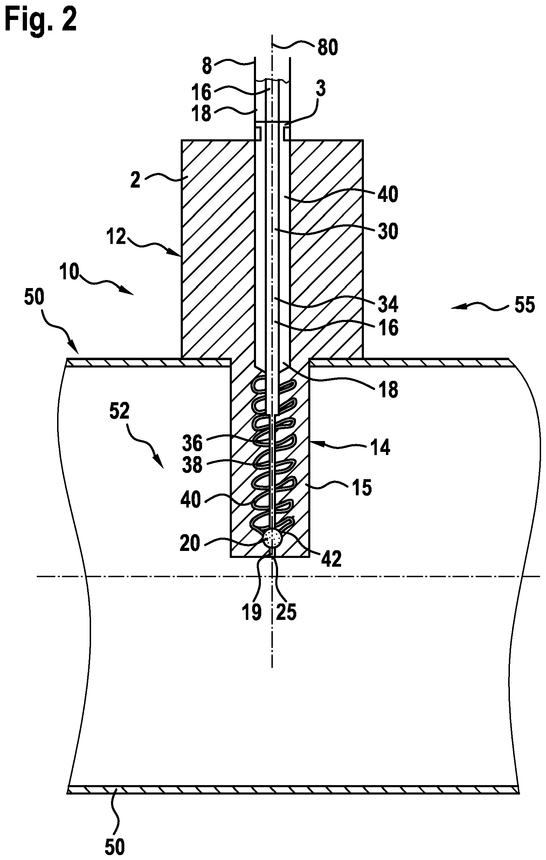

Ausführungsbeispiele der Erfindung sind in den Zeichnungen dargestellt und in der nachfolgenden Beschreibung näher erläutert. In den Figuren 1 und 2 sind gleiche Bauteile oder Bauteile mit gleicher Funktion mit den gleichen Bezugszeichen gekennzeichnet.
In Fig. 1 ist ein erstes Ausführungsbeispiel eines erfindungsgemäßen Abgaskanalsegmentes mit einer Dosiervorrichtung zur Abgasnachbehandlung einer Brennkraftmaschine offenbart.
Fig. 2 zeigt ein alternatives Ausführungsbeispiel einer Dosiervorrichtung eines erfindungsgemäßen Abgaskanalsegmentes.

### Ausführungsformen der Erfindung

In der Fig. 1 ist ein erfindungsgemäßes Abgaskanalsegment 55 mit einer Dosiervorrichtung 10 dargestellt, welche an einem Abgaskanal 50 einer nicht dargestellten Brennkraftmaschine angeschlossen ist. Die Dosiervorrichtung 10 umfasst ein Gehäuse 2, an welchem eine erste Anschlussstelle 3 für eine Reduktionsmittelleitung 6 sowie eine zweite Anschlussstelle 4 für eine Gasleitung 7 ausgebildet sind. Die Dosiervorrichtung 10 weist einen ersten Bereich 12 auf, welcher sich, wenn die Dosiervorrichtung am Abgaskanal montiert ist, außerhalb eines abgasführenden Bereichs 52 des Abgaskanals 50 befindet und einen zweiten Bereich 14, welcher sich im montierten Zustand innerhalb des abgasführenden Bereichs 52 des Abgaskanals 50 befindet. Dieser zweite Bereich 14 der Dosiervorrichtung 10 umfasst einen gasgefüllten Hohlzylinder 15, welcher den zweiten Bereich 14 der Dosiervorrichtung 10 thermisch isoliert. Entlang einer Mittelachse 80 der Dosiervorrichtung 10 ist ein erster Zufuhrkanal 30 ausgebildet, welcher sich von der Anschlussstelle 3 bis zu einem Mischraum 20 erstreckt. Der erste Zufuhrkanal 30 ist in einen ersten Abschnitt 34 und einen zweiten Abschnitt 36 unterteilt, wobei der zweite Abschnitt 36 als Kapillare 38 ausgebildet ist und in den Mischraum 20 mündet. Im ersten Abschnitt 34 des ersten Zufuhrkanals 30 bzw. im Übergang zwischen dem ersten Abschnitt 34 und dem zweiten Abschnitt 36 ist ein Dosierventil 32 angeordnet, durch welches eine Zufuhr eines flüssigen Reduktionsmittels 16 zum Mischraum 20 bzw. in den Abgaskanal 50 vollständig unterbunden werden kann. An dem Gehäuse 2 ist im ersten Bereich 12 ferner ein Anschlusskontakt 75 zur elektrischen Kontaktierung des Dosierventils 32 angeordnet. Über die zweite Anschlussstelle 4 kann eine Gasleitung 7, insbesondere eine Druckluftleitung, an die Dosiervorrichtung 10 angeschlossen werden. Von der zweiten Anschlussstelle 4, welche sich ebenfalls im ersten Bereich 12 der Dosiervorrichtung 10 befindet, führt ein zweiter Zufuhrkanal 40, zu dem Mischraum 20. Der zweite Zufuhrkanal 40 ist im zweiten Bereich 14 der Dosiervorrichtung 10 als Ringspalt ausgebildet, welcher den ersten Zufuhrkanal 30 ringförmig ummantelt. Auf der dem Mischraum 20 zugewandten Seite mündet der zweite Zufuhrkanal 40 über eine Austrittsöffnung 42 in den Mischraum 20, wobei die Austrittsöffnung 42 des zweiten Zufuhrkanals 40 düsenförmig ausgebildet ist. Zwischen der zweiten Anschlussstelle 4 und dem Mischraum 20 ist in der zweiten Zufuhrkanal 40 ein Rückschlagventil 44 angeordnet, welches ein Rückströmen von Abgas der Brennkraftmaschine oder von einem Medium aus dem Mischraum 20 in die Gasleitung 7 unterbindet.

Zur Abgasnachbehandlung der Brennkraftmaschine wird über die Dosiervorrichtung 10 das Reduktionsmittel 16 in den Abgaskanal 50 der Brennkraftmaschine eindosiert. Dabei ist das Gehäuse 2 über die erste Anschlussstelle 3 mit der Reduktionsmittelleitung 6 verbunden, wobei das Reduktionsmittel 16 aus einem Vorratsbehälter über ein nicht dargestellt Fördermittel und die Reduktionsmittelleitung 6 der Dosiervorrichtung 10 zugeführt wird. Über die mit der zweiten Anschlussstelle 4 verbundene Gasleitung 7 wird der Dosiervorrichtung 10 aus einer Versorgungs-einrichtung ein gasförmiges Treibmedium 18 zugeführt. Zur Eindosierung des Reduktionsmittels 16 wird das Dosierventil 32 der Dosiervorrichtung 10 über den Anschlusskontakt 55 angesteuert, wodurch das in dem ersten Zufuhrkanal 30 angeordnete Dosierventil 32 geöffnet wird. Das durch das Fördermittel unter Druck gesetzte Reduktionsmittel 16 strömt durch die Kapillare 38 des ersten Zufuhrkanals 30 in den Mischraum 20, wo das flüssigen Reduktionsmittel 16 durch das gasförmige Treibmedium 18 zerstäubt wird, bzw. sich ein Aerosol 19 aus dem gasförmigen Treibmedium 18 und dem flüssigen Reduktionsmittel 16 bildet. Das Reduktionsmittel 16 bzw. das Aerosol 19 wird über die Öffnung 25 im Gehäuse 2 in den abgasführenden Bereich 52 des Abgaskanals 50 der Brennkraftmaschine eindosiert. Beim Durchströmen des zweiten Zufuhrkanals 40 kühlt das gasförmige Treibmedium 18 das Reduktionsmittel 16 in der Kapillare 38 des ersten Zufuhrkanals 30. Durch die düsenförmig ausgebildete Austrittsöffnung 42 an einem dem Mischraum 20 zugewandten Ende des zweiten Zufuhrkanals 40 wird das gasförmige Treibmedium 18 vor Eintritt in den Mischraum 20 beschleunigt. Dabei kann die Düse sowohl als Unterschall-Düse mit sich stetig verringerndem Querschnitt als auch als Überschall-Düse, d.h. als sogenannte Laval-Düse mit sich in Strömungsrichtung des gasförmigen Treibmediums 18 zunächst verjüngendem Strömungsquerschnitt und ab einem engsten Strömungsquerschnitt erweiternden Querschnitt ausgebildet sein, wobei das gasförmige Treibmedium 18 beim Durchströmen des engsten Strömungsquerschnitts Schallgeschwindigkeit erreicht. Als gasförmiges Treibmedium 18 eignet sich insbesondere Druckluft, für das flüssige Reduktionsmittel 16 finden beispielsweise wässrige Harnstofflösung oder Kraftstoff Verwendung.

In Fig. 2 ist ein weiteres Ausführungsbeispiel des erfindungsgemäßen Abgaskanalsegments 55 mit einer alternativen Ausführung der Dosiervorrichtung 10 dargestellt. Bei der Beschreibung des Aufbaus der Dosiervorrichtung 10 wird im Folgenden nur auf die Unterschiede zu der Ausführungsform in Fig. 1 eingegangen. Das Gehäuse 2 weist eine gemeinsame Anschlussstelle 3 auf, über welche die Dosiervorrichtung 10 mit flüssigem Reduktionsmittel 16 und gasförmigen Treibmittel 18 versorgt wird. Im Gegensatz zu der Ausführungsform in Fig. 1 kann hierbei die zweite Anschlussstelle 4 entfallen. An die Anschlussstelle 3 ist eine gemeinsame Leitung 8 angeschlossen, wobei die gemeinsame Leitung 8 aus zwei konzentrischen Röhren besteht. Über die innere Röhre wird das Reduktionsmittel 16 dem ersten Zufuhrkanal 30 zugeführt, während über die äußere Röhre das gasförmige Treibmedium 18 dem zweiten Zufuhrkanal 40 zugeführt wird. Der erste Zufuhrkanal 30 weist einen ersten Abschnitt 34 auf, welcher weitestgehend den Querschnitt der inneren Röhre der gemeinsamen Leitung 8 hat. Der zweite Abschnitt 36 des ersten Zufuhrkanals 30 ist wiederum als Kapillare 38 ausgebildet, welche in den Mischraum 20 mündet. Ein Dosierventil kann in diesem Ausführungsbeispiel entfallen, wenn ein nicht dargestelltes Fördermittel, insbesondere eine Dosierpumpe, welches die Dosiervorrichtung 10 mit flüssigem Reduktionsmittel 16 versorgt, die Förder- und Dosierfunktion übernimmt. Der zweite Zufuhrkanal 40 ist im zweiten Bereich 14 der Dosiervorrichtung 10, welcher im montierten Zustand, d.h. wenn die Dosiervorrichtung 10 an dem Abgaskanal 50 angeschlossen ist, innerhalb des abgasführenden Bereichs 52 des Abgaskanalsegments 55 positioniert ist, als spiralförmiger Kanal ausgebildet, welcher spiralförmig um den ersten Zufuhrkanal 30 ausgebildet ist. Dabei ist alternativ eine Fortführung des zweiten Zufuhrkanals 40 im zweiten Bereich 14 in zwei spiralförmigen Teilkanälen, welche beispielsweise 180° zueinander versetzt sind, vorgesehen, wobei die beiden Teilkanäle in den Mischraum 20 münden.

Das Reduktionsmittel 16 wird der Dosiervorrichtung 10 über eine nichtdargestellt Dosierpumpe zugeführt, wobei eine Förderung und eine Zumessung des Reduktionsmittels 16 zum Mischraum 20 durch die Dosierpumpe erfolgt. Das gasförmige Treibmedium 18 wird dem Mischraum über den zweiten Zufuhrkanal 40 zugeführt, wobei das gasförmige Treibmedium im ersten Zufuhrkanal, insbesondere beim Durchströmen des spiralförmigen Kanals kühlt. Das gasförmige Treibmedium 18 wird in der Austrittsöffnung 42 beschleunigt, wobei die Austrittsöffnung bevorzugt als Laval-Düse ausgebildet ist. Durch die Ausbildung als Laval-Düse herrscht im engsten Strömungsquerschnitt der Austrittsöffnung der relativ höchste Druck in der Zufuhrleitung, wodurch ein Rückströmen von Reduktionsmittel 16, Aerosol 19 oder Abgas aus dem Mischraum 20 in die zweite Zufuhrleitung unterbunden wird. Alternativ kann in einer einfachen Ausführung die Austrittsöffnung 42 als einfache, beispielsweise geometrisch unveränderte, Fortsetzung des zweiten Zufuhrkanals 40 in den Mischraum 20 münden. Dabei soll durch die spiralförmige Gestaltung des zweiten Zufuhrkanals und die damit Verbundene Länge verhindert werden, dass hier ein Fluid aus dem Mischraum in den Bereich der Anschlussstelle 3 zurückströmt.

## Patentansprüche

1. Abgaskanalsegment (55) mit einer Dosiervorrichtung (10) zur Eindosierung eines Reduktionsmittels (16) in einen Abgaskanal (50) einer Brennkraftmaschine, wobei die Dosiervorrichtung (10) einen Mischraum (20) aufweist, wobei ein erster Zufuhrkanal (30) für ein flüssiges Reduktionsmittel (16) und ein zweiter Zufuhrkanal (40) für ein gasförmiges Treibmedium (18) in den Mischraum (20) münden, wobei der Mischraum (20) in einem abgasführenden Bereich (52) des Abgaskanalsegments (55) angeordnet ist, wobei die Dosiervorrichtung (10) einen ersten Bereich (12) aufweist, welcher sich außerhalb des abgasführenden Bereichs (52) befindet, und wobei die Dosiervorrichtung (10) einen zweiten Bereich (14), in welchem der Mischraum (20) ausgebildet ist, aufweist, wobei der zweite Bereich (14) innerhalb des abgasführenden Bereichs (52) angeordnet ist,**dadurch gekennzeichnet dass** der zweite Bereich (14) der Dosiervorrichtung (10) einen gasgefüllten Hohlzylinder (15) umfasst, wobei das Gas des gasgefüllten Hohlzylinders (15) den ersten Zufuhrkanal (30) und den zweiten Zufuhrkanal (40) thermisch gegenüber dem abgasführenden Bereich (52) des Abgaskanalsegments (55) isoliert.

2. Abgaskanalsegment (55) nach Anspruch 1, **dadurch gekennzeichnet, dass** der erste Zufuhrkanal (30) zumindest abschnittsweise als Kapillare (38) ausgebildet ist.

3. Abgaskanalsegment nach Anspruch 2, **dadurch gekennzeichnet, dass** der erste Zufuhrkanal (30) einen ersten Abschnitt (34) und einen zweiten Abschnitt (36) aufweist, wobei der zweite Abschnitt (36) als Kapillare (38) ausgebildet ist, und wobei die Kapillare (38) in den Mischraum (20) mündet.

4. Abgaskanalsegment nach einem der vorhergehenden Ansprüche, **dadurch gekennzeichnet, dass** die Dosiervorrichtung (10) in dem ersten Zufuhrkanal (30) ein Dosierventil (32) aufweist, über welches die Menge des dem Mischraum (20) zugeführten Reduktionsmittels (16) gesteuert oder geregelt wird.

5. Abgaskanalsegment nach einem der Ansprüche 1 bis 4, **dadurch gekennzeichnet, dass** der zweite Zufuhrkanal (40) den ersten Zufuhrkanal (30) ringförmig ummantelt oder spiralförmig um den ersten Zufuhrkanal (30) angeordnet ist.

6. Abgaskanalsegment nach einem der Ansprüche 1 bis 5, **dadurch gekennzeichnet, dass** eine in den Mischraum (20) führende Austrittsöffnung (42) des zweiten Zufuhrkanals (40) düsenförmig ausgebildet ist.

7. Abgaskanalsegment nach einem der Ansprüche 1 bis 6, **dadurch gekennzeichnet, dass** das gasförmige Treibmedium (18) Druckluft ist, und dass die Druckluft in dem Mischraum (20) derart auf das flüssige Reduktionsmittel (16) trifft, dass sich in dem Mischraum (20) ein Aerosol (19) des flüssigen Reduktionsmittels (16) bildet.

8. Verfahren zur Eindosierung eines Reduktionsmittels (16) in einen Abgaskanal (50) einer Brennkraftmaschine mit einem Abgaskanalsegment nach einem der vorhergehenden Ansprüche, wobei einem Mischraum (20) über einen ersten Zufuhrkanal (30) ein flüssiges Reduktionsmittel (16) und über einen zweiten Zufuhrkanal (40) ein gasförmiges Treibmedium (18) zugeführt wird, **dadurch gekennzeichnet, dass** in dem in einem abgasführenden Bereich (52) des Abgaskanalsegments (55) angeordneten Mischraum (20) das flüssige Reduktionsmittel (16) und das gasförmige Treibmedium (18) vermischt werden.

## Claims

1. Exhaust duct segment (55) having a dosing device (10) for dosing a reducing agent (16) into an exhaust duct (50) of an internal combustion engine, wherein the dosing device (10) has a mixing chamber (20), wherein a first feed duct (30) for a liquid reducing agent (16) and a second feed duct (40) for a gaseous propellant (18) open into the mixing chamber (20), wherein the mixing chamber (20) is arranged in an exhaust-gas-conducting region (52) of the exhaust duct segment (55), wherein the dosing device (10) has a first region (12) which is situated outside the exhaust gas-conducting region (52), and wherein the dosing device (10) has a second region (14) in which the mixing chamber (20) is formed, wherein the second region (14) is arranged within the exhaust-gas-conducting region (52), **characterized in that** the second region (14) of the dosing device (10) comprises a gas-filled hollow cylinder (15), wherein the gas of the gas-filled hollow cylinder (15) thermally insulates the first feed duct (30) and the second feed duct (40) with respect to the exhaust-gas-conducting region (52) of the exhaust duct segment (55).

2. Exhaust duct segment (55) according to Claim 1, **characterized in that** the first feed duct (30) is formed at least in sections as a capillary (38).

3. Exhaust duct segment according to Claim 2, **characterized in that** the first feed duct (30) has a first section (34) and a second section (36), wherein the second section (36) is in the form of a capillary (38), and wherein the capillary (38) opens into the mixing chamber (20).

4. Exhaust duct segment according to one of the preceding claims, **characterized in that** the dosing device (10) has, in the first feed duct (30), a dosing valve (32) by way of which the quantity of reducing agent (16) fed to the mixing chamber (20) is controlled or regulated.

5. Exhaust duct segment according to one of Claims 1 to 4, **characterized in that** the second feed duct (40) surrounds the first feed duct (30) in ring-shaped fashion or is arranged in spiral fashion around the first feed duct (30).

6. Exhaust duct segment according to one of Claims 1 to 5, **characterized in that** an outlet opening (42), which leads into the mixing chamber (20), of the second feed duct (40) is formed in the manner of a nozzle.

7. Exhaust duct segment according to one of Claims 1 to 6, **characterized in that** the gaseous propellant (18) is compressed air, and **in that**, in the mixing chamber (20), the compressed air impinges on the liquid reducing agent (16) such that an aerosol (19) of the liquid reducing agent (16) forms in the mixing chamber (20).

8. Method for dosing a reducing agent (16) into an exhaust duct (50) of an internal combustion engine having an exhaust duct segment according to one of the preceding claims, wherein a liquid reducing agent (16) is fed via a first feed duct (30), and a gaseous propellant (18) is fed via a second feed duct (40), to a mixing chamber (20), **characterized in that** the liquid reducing agent (16) and the gaseous propellant (18) are mixed in the mixing chamber (20) which is arranged in an exhaust-gas-conducting region (52) of the exhaust duct segment (55).

## Revendications

1. Segment de tuyau d'échappement (55) comprenant un dispositif de dosage (10) pour l'injection d'un agent réducteur (16) dans un tuyau d'échappement (50) d'un moteur à combustion interne, le dispositif de dosage (10) présentant un espace de mélange (20), un premier tuyau d'alimentation (30) pour un agent réducteur liquide (16) et un deuxième tuyau d'alimentation (40) pour un milieu propulseur gazeux (18) débouchant dans l'espace de mélange (20), l'espace de mélange (20) étant disposé dans une région conduisant les gaz d'échappement (52) du segment de tuyau d'échappement (55), le dispositif de dosage (10) présentant une première région (12) qui se trouve à l'extérieur de la région conduisant les gaz d'échappement (52), et le dispositif de dosage (10) présentant une deuxième région (14) dans laquelle est réalisé l'espace de mélange (20), la deuxième région (14) étant disposée à l'intérieur de la région conduisant les gaz d'échappement (52), **caractérisé en ce que** la deuxième région (14) du dispositif de dosage (10) comprend un cylindre creux (15) rempli de gaz, le gaz du cylindre creux (15) rempli de gaz isolant le premier tuyau d'alimentation (30) et le deuxième tuyau d'alimentation (40) thermiquement par rapport à la région conduisant les gaz d'échappement (52) du segment de tuyau d'échappement (55).

2. Segment de tuyau d'échappement (55) selon la revendication 1, **caractérisé en ce que** le premier tuyau d'alimentation (30) est réalisé au moins en partie sous forme de tube capillaire (38).

3. Segment de tuyau d'échappement selon la revendication 2, **caractérisé en ce que** le premier tuyau d'alimentation (30) présente une première portion (34) et une deuxième portion (36), la deuxième portion (36) étant réalisée sous forme de tuyau capillaire (38) et le tuyau capillaire (38) débouchant dans l'espace de mélange (20).

4. Segment de tuyau d'échappement selon l'une quelconque des revendications précédentes, **caractérisé en ce que** le dispositif de dosage (10) dans le premier tuyau d'alimentation (30) présente une soupape de dosage (32) par le biais de laquelle la quantité d'agent réducteur (16) acheminée à l'espace de mélange (20) est commandée ou régulée.

5. Segment de tuyau d'échappement selon l'une quelconque des revendications 1 à 4, **caractérisé en ce que** le deuxième tuyau d'alimentation (40) entoure sous forme annulaire le premier tuyau d'alimentation (30) ou est disposé en spirale autour du premier tuyau d'alimentation (30).

6. Segment de tuyau d'échappement selon l'une quelconque des revendications 1 à 5, **caractérisé en ce qu'**une ouverture de sortie (42) conduisant dans l'espace de mélange (20) du deuxième tuyau d'alimentation (40) est réalisée en forme de buse.

7. Segment de d'échappement selon l'une quelconque des revendications 1 à 6, **caractérisé en ce que** le milieu propulseur gazeux (18) est de l'air comprimé, et **en ce que** l'air comprimé dans l'espace de mélange (20) parvient sur l'agent réducteur liquide (16) de telle sorte qu'un aérosol (19) d'agent réducteur liquide (16) soit formé dans l'espace de mélange (20).

8. Procédé d'injection d'un agent réducteur (16) dans un tuyau d'échappement (50) d'un moteur à combustion interne comprenant un segment de tuyau d'échappement selon l'une quelconque des revendications précédentes, dans lequel un agent réducteur liquide (16) est acheminé par le biais d'un premier tuyau d'alimentation (30) et un milieu propulseur gazeux (18) est acheminé par le biais d'un deuxième tuyau d'alimentation (40) à un espace de mélange (20), **caractérisé en ce que** l'agent réducteur liquide (16) et le milieu propulseur gazeux (18) sont mélangés dans l'espace de mélange (20) disposé dans une région conduisant le gaz d'échappement (52) du segment de tuyau d'échappement (55).
